# EUROPÄISCHE PATENTSCHRIFT

(11) **EP 2 848 829 B1**
(45) Veröffentlichungstag und Bekanntmachung des Hinweises auf die Patenterteilung: **31.05.2017**
(21) Anmeldenummer: 14002775.6
(22) Anmeldetag: 07.08.2014
(51) Int. Cl.: F16B 45/02

(54) **Twist/Trilock Karabiner**
Twist/trilock carabiner
Mousqueton Twist/Trilock

(30) Priorität: 11.09.2013 DE 202013008111 U
(43) Veröffentlichungstag der Anmeldung: 18.03.2015
(73) Patentinhaber: Skylotec GmbH, 56566 Neuwied (DE)
(72) Erfinder: Rinklake, Kai, 56567 Neuwied (DE); Jungmann, Lukas, 9900 Lienz (AT); Schwingshackl, Ulrich, 39057 Eppan a.d. Weinstrasse (IT); Probst, Myriam, 50667 Köln (DE)
(74) Vertreter: Zeitler Volpert Kandlbinder Patent- und Rechtsanwälte Partnerschaft mbB

(56) Entgegenhaltungen:
- EP-A1- 0 826 890
- DE-U1- 29 610 293
- FR-A5- 2 146 704

## Beschreibung

Die Erfindung betrifft einen Karabiner mit einem eine Schnapperöffnung aufweisenden Grundkörper, einem in der Schnapperöffnung aufnehmbaren Schnapperteil, das an einem Ende verschwenkbar mit dem Grundkörper verbunden ist, und einer Verriegelungseinrichtung, die in einer Sperrstellung das Schnapperteil mit dem Grundkörper verriegelt und dadurch ein Verschwenken des Schnapperteils verhindert. Die Verriegelungseinrichtung weist einen Betätigungsabschnitt auf, der um die Längsachse des Schnapperteils herum verdreht wird und dadurch eine Verschwenkbewegung des Schnapperteils freigibt.

Ein Karabiner mit einer Verriegelungseinrichtung ist aus der Druckschrift EP 2 397 708 A1 bekannt. Dort umfasst die Verriegelungseinrichtung zwei in jeweils einer nutförmigen Vertiefung der Außenseite des Schnapperteils angeordnete, wippend gelagerte Verriegelungshebel, die in der Sperrstellung mit einem Ende in jeweils eine Ausnehmung des Grundkörpers eingreifen und dadurch das Schnapperteil an dem Grundkörper verriegeln. Das Schnapperteil kann dann nicht in den von dem Grundkörper ausgebildeten Innenbereich verschwenkt werden. Ein Öffnen des Karabiners ist somit in der Sperrstellung nicht möglich. Zum Entriegeln des Schnapperteils ist es erforderlich, die beiden Verriegelungshebel drückend zu betätigen, wodurch die Enden der Verriegelungshebel aus den Ausnehmungen des Grundkörpers herausgeschwenkt werden. Nachteilig an diesem Karabiner ist, dass zum Entriegeln des Verschlusselements die beiden Verriegelungselemente gleichzeitig drückend betätigt werden müssen. Dies kann problematisch sein, wenn der Karabiner beim Klettern verwendet wird, wo in bestimmten Situationen die beiden Verriegelungselemente nur schwer gleichzeitig mit einer Hand erreichbar sind.

Einfacher in der Bedienung der Verriegelungseinrichtung sind bekannte Twist-Lock-Karabiner, bei denen ein Betätigungsabschnitt der Verriegelungseinrichtung um die Längsachse des Schnapperteils herum verdreht wird, um die Verriegelung zu lösen und eine Verschwenkung des Schnapperteils in den Innenbereich des Grundköpers freizugeben. Dabei ist eine das Schnapperteil umlaufende Hülse, die den Betätigungsabschnitt aufweist, so lang, dass sie über die Verbindungsstelle zwischen Schnapperteil und Grundköper reicht. Sie hat jedoch eine Aussparung, die nach einer Verdrehung der Hülse um das Schnapperteil das Öffnen des Karabiners durch Verschwenken des Schnapperteils ermöglicht. Es hat sich allerdings herausgestellt, dass in bestimmten Klettersituationen auch die Entriegelung eines Twist-Lock-Karabiners problematisch sein kann.

Die Druckschrift DE 296 10 293 U1 beschreibt einen Karabinerhaken mit einer auf einem Schnäpper beweglich gelagerten Sicherungshülse, die zur Entriegelung des Schnäppers unter Drehung wahlweise in beiden Richtungen axial verschieblich ist.

In Anbetracht der beschriebenen Probleme ist es die Aufgabe der vorliegenden Erfindung, einen Karabiner bereitzustellen, der sich einfach und zuverlässig entriegeln lässt, der sich aber gleichzeitig nicht ungewollt öffnet und dadurch eine ausreichende Sicherheit auch bei Kletteranwendungen bietet.

Diese Aufgabe wird durch eine Weiterbildung der beschriebenen Twist-Lock-Karabiner gelöst, die im Wesentlichen dadurch gekennzeichnet ist, dass der Betätigungsabschnitt ausgehend von der Sperrstellung im Uhrzeigersinn in eine erste Drehstellung und im Gegenuhrzeigersinn in eine zweite Drehstellung verdrehbar eingerichtet ist, wobei in beiden Drehstellungen ein Verschwenken des Schnapperteils freigegeben ist.

Der Karabiner weist dazu ein durch Verdrehung im Uhrzeigersinn vorspannbares erstes Vorspannteil und ein durch Verdrehung im Gegenuhrzeigersinn vorspannbares zweites Vorspannteil auf. Das erste Vorspannteil kann nach einer Verdrehung des Betätigungsabschnitts im Uhrzeigersinn die Verriegelungseinrichtung zurück in die Sperrstellung drängen, und das zweite Vorspannteil kann nach einer Verdrehung des Betätigungsabschnitts im Gegenuhrzeigersinn die Verriegelungseinrichtung zurück in die Sperrstellung drängen.

Die Erfindung geht auf die Erkenntnis zurück, dass ein Karabiner beim Klettern nicht notwendigerweise immer in gleicher Lage angeordnet ist, wenn er zum Entriegeln und Öffnen mit einer Hand ergriffen wird. Wenn ein herkömmlicher Twist-Lock-Karabiner gegenüber sein er üblichen Lage verdreht angeordnet ist, wird der Verwender zunächst durch Drehung in inkorrekter, da gewohnter Richtung versuchen, den Karabiner zu entriegeln. Dies kostet Zeit und verschlechtert den Bedienkomfort. Der erfindungsgemäße Karabiner kann dagegen durch Drehung in beide Drehrichtungen entriegelt werden, so dass in jeder Karabinerlage der erste Drehversuch des Benutzers zur gewünschten Entriegelung führt.

Hinzu kommt, dass Linkshänder üblicherweise eine gegenüber Rechtshändern gegenläufige Drehbewegung vorziehen, da aufgrund motorischer Gegebenheiten eine rechte Hand auf einfache Weise Dreh- bzw. Schraubbewegungen im Gegenuhrzeigersinn durchführen kann, während eine linke Hand auf einfache Weise Dreh- bzw. Schraubbewegungen im Uhrzeigersinn durchführen kann. Dieses Problem kann dadurch gelöst werden, dass für Rechtshänder Twist-Lock-Karabiner hergestellt werden, die sich durch Drehen des Betätigungsabschnitts im Gegenuhrzeigersinn öffnen lassen, während für Linkshänder Twist-Lock-Karabiner hergestellt werden, die sich durch Drehen des Betätigungsabschnitts im Uhrzeigersinn öffnen lassen. Dies ist allerdings mit einem hohen Kostenaufwand verbunden. Die erfindungsgemäßen Karabiner können demgegenüber von Linkswie Rechtshändern gleichermaßen mit hohem Bedienkomfort verwendet werden.

Zum Verhindern eines ungewollten Öffnens des verriegelten Karabiners hat es sich als vorteilhaft herausgestellt, dass die Verriegelungseinrichtung durch mindestens eines der Vorspannteile, bevorzugt eine Feder, insbesondere eine Drehfeder, aus der ersten und/oder der zweiten Drehstellung in die Sperrstellung gedrängt wird. Mit anderen Worten wird die Verriegelungseinrichtung durch das infolge der Verdrehung durch den Verwender vorgespannte Vorspannteil zurück in die Sperrstellung gedreht, sobald ein in einer Drehstellung angeordnetes Betätigungselement losgelassen wird. In unbetätigtem Zustand befindet sich die Verriegelungseinrichtung folglich immer in der Sperrstellung, in der ein versehentliches Verschwenken des Schnapperteils verhindert ist. Dies erhöht die Sicherheit insbesondere für Kletteranwendungen.

Vorzugsweise weisen das erste Vorspannteil und das zweite Vorspannteil jeweils auch in der Sperrstellung eine Vorspannung auf, wobei die beiden Vorspannungen gegenläufig (im Uhrzeigersinn und im Gegenuhrzeigersinn gerichtet), aber in ihrem Betrag etwa gleich sind, so dass der Betätigungsabschnitt ohne äußere Krafteinwirkung in der Sperrstellung verbleibt. Hierdurch wird die Lage des Betätigungsabschnitts stabilisiert.

Mit anderen Worten können die Vorspannungen von erstem und zweitem Vorspannteil derart angepasst sein, dass die Verriegelungseinrichtung aus beiden Drehstellungen in die Sperrstellung gedrängt wird. In einer besonders bevorzugten Ausführungsform sind die beiden Vorspannteile zwei gegenläufig (um 180° verdreht) eingebaute Drehfedern, von denen bei einer Verdrehung des Betätigungsabschnitts die eine Drehfeder gespannt wird und die andere entspannt wird. Während in der Sperrstellung beide Drehfedern den Betätigungsabschnitt mit etwa gleichem Kraftbetrag in gegenläufige Drehrichtungen drängen, so dass der Betätigungsabschnitt in der Sperrstellung verbleibt, überwiegt nach einer Verdrehung des Betätigungsabschnitts in eine der Drehstellungen der Betrag der Vorspannung der einen Drehfeder den Betrag der Vorspannung der anderen Drehfeder, was zu einer resultierenden Kraft führt, die den Betätigungsabschnitt zurück in die Sperrstellung drängt.

Vorzugsweise ist der Verdrehungswinkel, um den der Betätigungsabschnitt von der Sperrstellung in die erste Drehstellung zu verdrehen ist, größer als 30°, bevorzugt größer als 60°, insbesondere etwa 90° oder mehr, während der Verdrehungswinkel, um den der Betätigungsabschnitt von der Sperrstellung in die zweite Drehstellung zu verdrehen ist, größer als -30°, bevorzugt größer als -60°, insbesondere etwa - 90° oder mehr beträgt. Durch einen großen Verdrehungswinkel wird ein unabsichtliches Entriegeln des Schnapperteils verhindert.

Die Vorspannung der beiden Drehfedern in der Sperrstellung ist vorzugsweise an den Verdrehungswinkel angepasst. Wenn die Drehfedern in der Sperrstellung jeweils exakt um den Verdrehungswinkel vorgespannt sind, ist in den beiden Drehstellungen die eine Drehfeder vollständig entspannt, während die andere Drehfeder um etwa den doppelten Betrag gegenüber der Sperrstellung vorgespannt ist. Vorzugsweise sind deshalb die beiden Drehfedern in der Sperrstellung in gegenläufiger Drehrichtung jeweils um einen Winkel vorgespannt, der etwas größer ist als der Verdrehungswinkel (mehr als 5% größer aber weniger als 50% größer). Dies führt zu einer leichtgängigen, aber gleichzeitig stabilen Bedienbarkeit des Betätigungsabschnitts und führt im unbetätigten Zustand zu einer schnellen Rückstellung des Betätigungsabschnitts in die Sperrstellung.

In einer bevorzugten Ausführungsform der Erfindung weist die Verriegelungseinrichtung einen zusammen mit dem Betätigungsabschnitt verdrehbaren Verriegelungsabschnitt auf, der in der Sperrstellung mit einer Kontaktfläche des Grundkörpers zusammenwirkt und dadurch ein Verschwenken des Schnapperteils verhindert, und der in beiden Drehstellungen um die Kontaktfläche herum verdreht ist und dadurch ein Verschwenken des Schnapperteils freigibt. Verriegelungsabschnitt und Betätigungsabschnitt sind vorzugsweise einteilig gebildet. Die Kontaktfläche des Grundkörpers kann ein vorstehender Rand der Schnapperöffnung des Grundkörpers sein, der von dem Verriegelungsabschnitt übergriffen wird. Die Kontaktfläche des Grundkörpers liegt in der Sperrstellung in der Verschwenkungsbahn des Verriegelungsabschnitts, so dass der Verriegelungsabschnitt und die Kontaktfläche des Grundkörpers bei einem Verschwenkungsversuch des Benutzers ausgehend von der Sperrstellung in gegenseitigen Kontakt kommen.

Durch ein Verdrehen des Betätigungsabschnitts (sowohl im Uhrzeigersinn in die erste Drehstellung als auch im Gegenuhrzeigersinn in die zweite Drehstellung) wird der Verriegelungsabschnitt so verdreht, dass die Kontaktfläche des Grundkörpers nicht mehr in der Verschwenkungsbahn des Verriegelungsabschnitts liegt - das Schnapperteil ist entriegelt und kann verschwenkt werden.

Vorzugsweise sind der Betätigungsabschnitt und bevorzugt auch der Verriegelungsabschnitt Teile einer das Schnapperteil umlaufenden Hülse. Dadurch wird das Innere des Schnapperteils vor Verschmutzungen geschützt. Zusätzlich bietet eine das Schnapperteil bevorzugt vollständig umlaufende Hülse eine große Angriffsfläche für den Benutzer, was ein Ergreifen des Betätigungsabschnitts der Hülse einfach macht. Hierdurch wird der Bedienkomfort erhöht.

Alternativ oder zusätzlich ist der Verriegelungsabschnitt ein in Richtung auf den Grundkörpers vorstehender Randabschnitt der Hülse, wobei die Hülse vorzugsweise einteilig gebildet ist und sowohl den Betätigungsabschnitt als auch den Verriegelungsabschnitt aufweist.

Der Bedienkomfort des Karabiners wird weiter erhöht durch einen eine Verdrehung im Uhrzeigersinn begrenzenden ersten Absatz der Hülse und einen eine Verdrehung im Gegenurzeigersinn begrenzenden zweiten Absatz der Hülse. Die Absätze können vorstehende Randabschnitte der Hülse an dem dem Verriegelungsabschnitt entgegengesetzten Ende der Hülse sein, die bei einer Verdrehung in die erste bzw. die zweite Drehstellung in Umfangsrichtung in Anlage an eine Kontaktfläche des Schnapperteils kommen, so dass ein weiteres Verdrehen verhindert wird.

Im Hinblick auf eine einfache und kostengünstige Herstellbarkeit des erfindungsgemäßen Karabiners können die Drehfedern das Schnapperteil umlaufen und jeweils einerseits an das Schnapperteil und andererseits an die Hülse gekoppelt sein. Zum Verstellen der Verriegelungseinrichtung von der Sperrstellung in eine der Drehstellungen wird die Hülse also am Betätigungsabschnitt ergriffen und um das Schnapperteil herum verdreht, wodurch die Drehfedern vorgespannt werden.

In einer weiteren, besonders bevorzugten Ausführungsform ist der Betätigungsabschnitt zusätzlich auch in Längsrichtung des Schnapperteils axial verschiebbar eingerichtet. Eine axiale Verschiebbarkeit des Betätigungsabschnitts ist bspw. bei bekannten Tri-Lock-Karabinern gegeben. Bei solchen Tri-Lock-Karabinern sind zum Öffnen des Karabiners drei unabhängige Bewegungsabläufe durchzuführen: Das Verschieben des Betätigungsabschnitts in Längsrichtung des Schnapperteils, das Verdrehen des Betätigungsabschnitts um die Längsachse des Schnapperteils herum und das Verschwenken des Schnapperteils in Richtung auf das Innere des Grundkörpers. Dies macht Tri-Lock-Karabiner besonders sicher, da ein versehentliches Öffnen des Karabiners aufgrund der dreifachen Sicherung praktisch ausgeschlossen ist.

Vorzugsweise ist bei dem erfindungsgemäßen Karabiner eine axiale Verschiebbarkeit des Betätigungsabschnitts von einer die Verdrehung des Betätigungsabschnitts sperrenden ersten Sperrstellung in eine die Verdrehung des Betätigungsabschnitts freigebende zweite Sperrstellung gegeben. Eine Verschwenkung des Schnapperteils ist sowohl in der ersten als auch in der zweiten Sperrstellung blockiert. Der Betätigungsabschnitt ist also zunächst von der ersten Sperrstellung in die zweite Sperrstellung axial zu verschieben, und kann ausgehend von der zweiten Sperrstellung sowohl im Uhrzeigersinn als auch im Gegenuhrzeigersinn verdreht werden, um ein Verschwenken des Schnapperteils und damit ein Öffnen des Karabiners freizugeben. Die zweite Sperrstellung entspricht bei dieser Ausführungsform also der oben beschriebenen Sperrstellung. Die Verriegelungseinrichtung kann zu diesem Zweck einen zusammen mit dem Betätigungsabschnitt axial verschiebbaren Anlageabschnitt aufweisen, der in der ersten Sperrstellung in Umfangsrichtung an einer Kontaktfläche des Schnapperteils und/oder des Grundkörpers anliegt und dadurch eine Verdrehung des Betätigungsabschnitts bzw. eine Verdrehung der Hülse verhindert. In einer besonders bevorzugten Ausführungsform weist der Anlageabschnitt eine in einem Rand der Hülse gebildete Nut auf, in die in der ersten Sperrstellung ein die Kontaktfläche aufweisender Stift eingreift. Durch axiales Verschieben der Hülse in die zweite Sperrstellung wird der Stift aus der Nut herausbewegt, so dass die Hülse in der zweiten Sperrstellung um die Längsachse des Schnapperteils verdrehbar ist.

Ein unbeabsichtigtes Öffnen des Karabiners kann durch ein den Betätigungsabschnitt bzw. die Hülse von der zweiten Sperrstellung in die erste Sperrstellung drängendes weiteres Vorspannteil, bevorzugt eine Druckfeder, verhindert werden. In unbetätigtem Zustand wird die Verriegelungseinrichtung also selbsttätig in die zweite Sperrstellung verstellt bzw. in der zweiten Sperrstellung gehalten. Wenn sich die Verriegelungseinrichtung in der ersten oder der zweiten Drehstellung befindet, versetzen das erste bzw. das zweite Vorspannteil die Hülse zunächst in die zweite Sperrstellung, woraufhin das weitere Vorspannteil die Hülse in die erste Sperrstellung verstellt.

Im Folgenden wird die Erfindung unter Bezugnahme auf die beigefügten Zeichnungen, auf die im Hinblick auf erfindungswesentliche und in der obigen Beschreibung nicht ausdrücklich herausgestellte Einzelheiten verwiesen wird, beispielhaft erläutert. In den Zeichnungen zeigt:
Fig. 1 eine erste Ausführungsform eines erfindungsgemäßen Twist-Lock-Karabiners in der Sperrstellung, wobei zur übersichtlichen Darstellung der Verriegelungseinrichtung ein Teil der Hülse weggelassen ist,
Fig. 2 eine Seitenansicht der in Fig. 1 dargestellten Ausführungsform in verschiedenen Stellungen, nämlich die Sperrstellung S (links), die erste und die zweite Drehstellung D1, D2 vor Verschwenken des Schnapperteils (Mitte) und die erste und die zweite Drehstellung nach Verschwenken des Schnapperteils (rechts),
Fig. 3 eine zweite Ausführungsform eines erfindungsgemäßen Karabiners in der Sperrstellung, wobei zur übersichtlichen Darstellung der Verriegelungseinrichtung ein Teil der Hülse weggelassen ist,
Fig. 4 eine Seitenansicht der in Fig. 3 dargestellten Ausführungsform in verschiedenen Stellungen der Verriegelungseinrichtung, nämlich die erste Sperrstellung S1 (links), die zweite Sperrstellung S2 (Mitte links), die erste und die zweite Drehstellung D1, D2 vor Verschwenken des Schnapperteils (Mitte rechts) und die erste und die zweite Drehstellung nach Verschwenken des Schnapperteils (rechts).

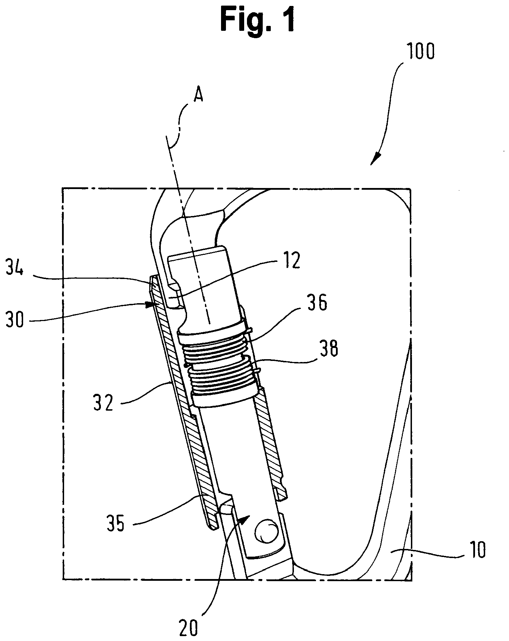

Fig. 1 zeigt eine erste Ausführungsform eines erfindungsgemäßen Karabiners 100. Der dargestellte Karabiner 100 umfasst einen Grundkörper 10 in Form eines gebogenen Profilelements, dessen zwei freie Enden, sich in einem Abstand gegenüberliegend, eine Schnapperöffnung zur Aufnahme eines Schnapperteils 20 ausbilden. Die Schnapperöffnung ist mittels des Schnapperteils 20 verschließbar, das in Form eines kurzen, geraden Profilelements gebildet ist. Das Schnapperteil 20 ist an einem seiner Enden mittels eines Stifts verschwenkbar mit dem einen Ende des Grundkörpers verbunden.

In Fig. 1 ist der Karabiner in einer Sperrstellung S gezeigt, in der ein Verschwenken des Schnapperteils 20 in Richtung auf das Innere des Grundkörpers 10 durch eine Verriegelungseinrichtung 30 verhindert wird. Die Verriegelungseinrichtung 30 weist einen mit dem Schnapperteil 20 verbundenen und damit verschwenkbaren Verriegelungsabschnitt 34 auf, der in der Sperrstellung S einen vorstehenden Rand an dem anderen Ende des Grundkörpers 10 übergreift und deshalb in Anlage an eine Kontaktfläche 12 des vorstehendes Rands kommt, wenn ein Verwender ausgehend von der Sperrstellung S versucht, das Schnapperteil nach innen zu verschwenken. Mit anderen Worten liegt die Kontaktfläche 12 des Grundkörpers in dem Verschwenkungsweg des Verriegelungsabschnitts 34 des Schnapperteils 20, so dass in der Sperrstellung S ein Verschwenken nicht möglich ist.

Um ein Verschwenken des Schnapperteils 20 freizugeben, muss der Verwender zunächst einen Betätigungsabschnitt 32 der Verriegelungseinrichtung 30 betätigen, nach dessen Betätigung die Kontaktfläche 12 des Grundkörpers kein Hindernis mehr für den Verriegelungsabschnitt 34 der Verriegelungseinrichtung 30 darstellt.

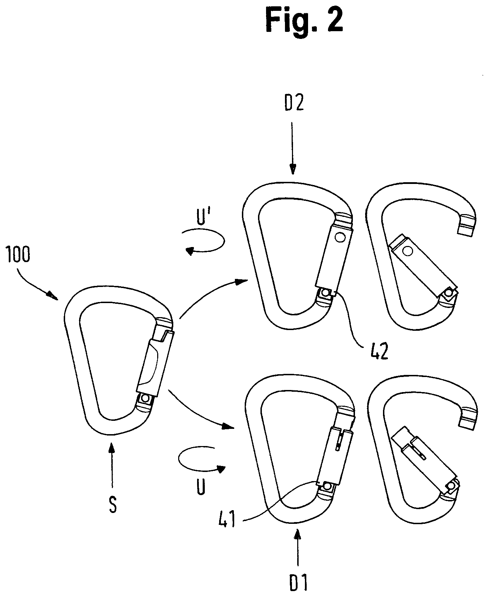

Der Betätigungsabschnitt 32 und der Verriegelungsabschnitt 34 sind in Form einer das Schnapperteil 20 umlaufenden Hülse 35 gebildet, die in Fig. 2 besonders deutlich dargestellt ist. In Fig. 1 ist ein dem Inneren des Grundkörpers zugewandter Teil der Hülse 35 zur besseren Übersichtlichkeit weggelassen, so dass in Fig. 1 ein Blick in den von der Hülse umgebenen Raum freigegeben ist.

Ausgehend von der Sperrstellung S kann die Verriegelungseinrichtung 30 durch Verdrehen des Betätigungsabschnitts 32 im Uhrzeigersinn U um die Längsachse A des Schnapperteils 20 in eine erste Drehstellung D1 verstellt werden und durch Verdrehen im Gegenuhrzeigersinn U' in eine zweite Drehstellung D2 verstellt werden, in denen jeweils eine Verschwenkung des Schnapperteils freigegeben ist. Zusammen mit dem Betätigungsabschnitt 32 wird nämlich die Hülse 35 und mit dieser auch der Verriegelungsabschnitt 34 solange verdreht, bis der Verriegelungsabschnitt 34 aus seiner Blockierungsposition herausgedreht ist. Diese Drehstellungen D1 und D2 sind in Fig. 2 in der Mitte dargestellt. Als Uhrzeigersinn U ist dabei vorliegend diejenige Drehrichtung definiert, in der die Hülse ausgehend von der Stellung S in Fig. 2 in die Stellung D1 in Fig. 2 verdreht wird (Blick von unten in Fig. 2, in dieser Drehrichtung verdrehen linke Hände üblicherweise). Als Gegenuhrzeigersinn U' ist dagegen diejenige Drehrichtung definiert, in der die Hülse ausgehend von der Stellung S in Fig. 2 in die Stellung D2 in Fig. 2 verdreht wird (Blick von unten in Fig. 2, in dieser Drehrichtung verdrehen rechte Hände üblicherweise).

Wie den Darstellungen der Fig. 2 entnommen werden kann, beträgt der Verdrehungswinkel zwischen der Sperrstellung S und der ersten Drehstellung D1 etwa 90°, während der Verdrehungswinkel zwischen der Sperrstellung S und der zweiten Drehstellung D2 etwa -90° beträgt. In diesen Drehlagen kann das Schnapperteil 20 mit der nach oben vorstehenden Hülse 35 jeweils an dem nach unten vorstehenden Abschnitt 12 des Grundkörpers 10 seitlich vorbei geschwenkt werden. Ein übermäßiges Verdrehen des Betätigungsabschnitts 34 über die beiden Drehstellungen D1, D2 hinaus wird durch zwei nach unten vorstehende Absätze 41, 42 verhindert, von denen bei Erreichen der ersten Drehstellung D1 der erste Absatz 41 mit einem vorstehenden Stift des Schnapperteils 20 zum Verhindern einer weiteren Verdrehung zusammenwirkt und von denen bei Erreichen der zweiten Drehstellung D2 der zweite Absatz 42 mit dem vorstehenden Stift des Schnapperteils 20 zum Verhindern einer weiteren Verdrehung zusammenwirkt. Hierdurch wird zum einen eine Beschädigung der Drehmechanik verhindert und zum anderen dem Verwender das Erreichen der Entriegelungsstellung erkennbar gemacht.

Die Verriegelungseinrichtung 30 wird durch das Zusammenwirken zweier gegenläufig (um 180° verdreht) eingebauter Drehfedern 36, 38 aus jeder der beiden Drehstellungen D1, D2 zurück in die Sperrstellung S gedrängt. Die beiden Drehfedern 36, 38 umlaufen jeweils das Schnapperteil 20 und sind einerseits an das Schnapperteil 20 und andererseits an die Hülse 35 gekoppelt, so dass sie nach einer Verdrehung der Hülse 35 um das Schnapperteil 20 die Hülse und damit den Verriegelungsabschnitt 34 zurück in die Sperrstellung 34 drängen.

In der Sperrstellung S entsprechen die Beträge der Vorspannungen der beiden Drehfedern 36, 38 einander, so dass sich infolge des gegenläufigen Einbaus keine resultierende Drehkraft ergibt - die Verriegelungseinrichtung 30 verbleibt in der Sperrstellung S. Nach einer Verdrehung der Hülse um das Schnapperteil 20 überwiegt die Vorspannung der einen Drehfeder 36 diejenige der andere Drehfeder 38 so dass sich eine resultierende Kraft ergibt, die die Hülse zurück in die Sperrstellung S drängt. Die beiden Drehfedern sind nämlich derart gegenläufig angeordnet, dass bei einer Verdrehung des Betätigungsabschnitts um die Achse A herum die eine Drehfeder gespannt wird, während die andere entspannt wird.

Anstelle der Drehfedern können andere Vorspannteile wie etwa andere Federn verwendet werden.

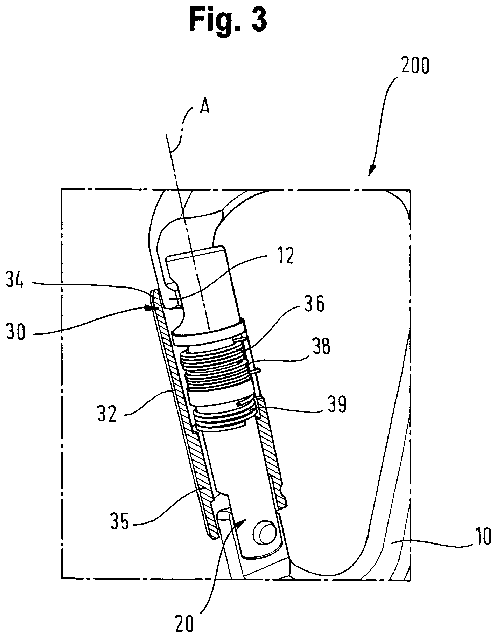

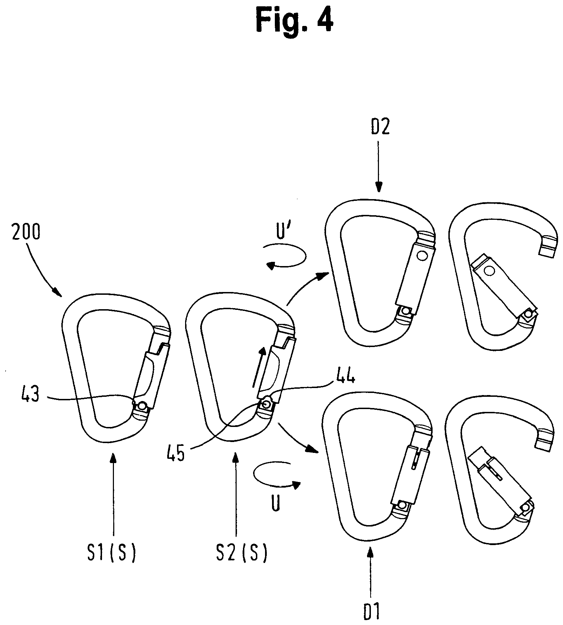

In den Figuren 3 und 4 ist eine alternative Ausführungsform eines erfindungsgemäßen Karabiners 200 gezeigt. Diese alternative Ausführungsform ist als Trilock-Karabiner ausgestaltet, dessen Betätigungselement 32 zum Öffnen des Karabiners 200 nicht nur verdreht und verschwenkt, sondern auch in axialer Richtung verschoben werden muss. Aus diesem Grund verhindert die zweite Ausführungsform besonders zuverlässig ein unabsichtliches Öffnen des Karabiners.

Bei der zweiten Ausführungsform ist die gesamte Hülse 35 in axialer Richtung verschiebbar gelagert. In einer ersten Sperrstellung S1, die in Fig. 4 links dargestellt ist und bei der keine äußere Kraft auf das Betätigungselement 34 wirkt, wird die Hülse 35 durch eine weitere Feder 39 in Anlage an einen seitlich vorstehenden Stift 45 des Schnapperteils gedrängt. Eine Verdrehung der Hülse 35 wird in der ersten Sperrstellung S1 dadurch verhindert, dass die Hülse an dem dem Verriegelungsabschnitt 34 entgegengesetzten Ende einen Anlageabschnitt 43 in Form eines unteren Rands der Hülse aufweist, in den eine Nut 44 eingebracht ist, die an die Abmessung des Stifts 45 angepasst ist. Durch die weitere Feder 39 wird die Nut 44 in Eingriff mit dem Stift 45 gedrängt, wodurch ein Verdrehen der Hülse verhindert wird. Die weitere Feder 39 ist als Druckfeder vorgesehen, umläuft wie die anderen beiden Vorspannteile 36, 38 das Schnapperteil 20 und wird von der Hülse 35 umlaufen und dadurch vor Beschädigungen geschützt. Anstelle der Druckfeder 39 kann ein anderes Vorspannteil vorgesehen sein.

Zum Öffnen des Schnapperteils 20 ausgehend von der ersten Sperrstellung S1 wird die Hülse 35 in axialer Richtung gegen die Vorspannkraft der Druckfeder 39 verschoben, bis der Stift 45 aus der Nut 44 herausgeführt ist. Der Karabiner befindet sich dann in einer zweiten Sperrstellung S2, in der zwar ein Verdrehen der Hülse, aber kein Verschwenken des Schnapperteils 35 freigegeben ist. Anschließend wird die Hülse entweder im Uhrzeigersinn U oder im Gegenuhrzeigersinn U' um das Schnapperteil 35 herum verdreht, bis sich die Verriegelungseinrichtung in der ersten oder zweiten Drehstellung D1, D2 befindet. Ein Öffnen des Schnapperteils 20 ist in den beiden Drehstellungen D1, D2 freigegeben.

Die Erfindung ist nicht auf die oben beschriebenen Ausführungsformen beschränkt. Vielmehr können anstelle der Federn andere Vorspannelemente verwendet werden. Ferner kann der Verriegelungsmechanismus zur Verriegelung von Schnapperteil und Grundkörper anders ausgestaltet sein.

## Patentansprüche

1. Karabiner (100, 200) mit einem eine Schnapperöffnung aufweisenden Grundkörper (10), einem in der Schnapperöffnung aufnehmbaren Schnapperteil (20), das an einem Ende verschwenkbar mit dem Grundkörper (10) verbunden ist, und einer Verriegelungseinrichtung (30), die in einer Sperrstellung (S) das Schnapperteil (20) mit dem Grundkörper (10) verriegelt und dadurch ein Verschwenken des Schnapperteils verhindert, wobei die Verriegelungseinrichtung einen Betätigungsabschnitt (32) umfasst, der zum Entriegeln um die Längsachse (A) des Schnapperteils (20) herum verdrehbar ist, wobei der Betätigungsabschnitt (32) ausgehend von der Sperrstellung (S) im Uhrzeigersinn (U) in eine erste Drehstellung (D1) und im Gegenuhrzeigersinn (U') in eine zweite Drehstellung (D2) verdrehbar eingerichtet ist, wobei in beiden Drehstellungen ein Verschwenken des Schnapperteils (20) freigegeben ist, **gekennzeichnet durch** ein durch Verdrehung im Uhrzeigersinn vorspannbares erstes Vorspannteil (36) und ein durch Verdrehung im Gegenuhrzeigersinn vorspannbares zweites Vorspannteil (38).

2. Karabiner nach Anspruch 1, **dadurch gekennzeichnet, dass** die Verriegelungseinrichtung (30) durch das erste und/oder das zweite Vorspannteil (36, 38), bevorzugt eine Feder, insbesondere eine Drehfeder, aus der ersten und/oder der zweiten Drehstellung in die Sperrstellung gedrängt wird.

3. Karabiner nach Anspruch 1 oder 2, **dadurch gekennzeichnet, dass** die Vorspannungen von erstem und zweitem Vorspannteil (36, 38) derart angepasst sind, dass die Verriegelungseinrichtung (30) aus beiden Drehstellungen in die Sperrstellung gedrängt wird.

4. Karabiner nach einem der vorhergehenden Ansprüche, **gekennzeichnet durch** zwei gegenläufig eingebaute Drehfedern, von denen bei einer Verdrehung des Betätigungsabschnitts (32) die eine Drehfeder gespannt wird und die andere entspannt wird.

5. Karabiner nach einem der vorhergehenden Ansprüche, **dadurch gekennzeichnet, dass** die Verriegelungseinrichtung einen zusammen mit dem Betätigungsabschnitt verdrehbaren Verriegelungsabschnitt (34) aufweist, der in der Sperrstellung mit einer Kontaktfläche (12) des Grundkörpers zusammenwirkt und dadurch ein Verschwenken des Schnapperteils (20) verhindert und der in beiden Drehstellungen um die Kontaktfläche (12) herum verdreht ist und dadurch ein Verschwenken des Schnapperteils freigibt.

6. Karabiner nach einem der vorhergehenden Ansprüche, **dadurch gekennzeichnet, dass** der Betätigungsabschnitt (32) und bevorzugt der Verriegelungsabschnitt (34) Teile einer das Schnapperteil umlaufenden Hülse (35) sind.

7. Karabiner nach Anspruch 6, **dadurch gekennzeichnet, dass** der Verriegelungsabschnitt (34) ein in Richtung auf den Grundkörper (10) vorstehender Randabschnitt der Hülse (35) ist.

8. Karabiner nach Anspruch 6 oder 7, **gekennzeichnet durch** einen eine Verdrehung im Uhrzeigersinn begrenzenden ersten Absatz (41) der Hülse und einen eine Verdrehung im Gegenuhrzeigersinn begrenzenden zweiten Absatz (42) der Hülse (35).

9. Karabiner nach einem der Ansprüche 6 bis 8, **dadurch gekennzeichnet, dass** die Drehfedern (36, 38) das Schnapperteil umlaufen und jeweils einerseits an das Schnapperteil (20) und andererseits an die Hülse (35) gekoppelt sind.

10. Karabiner nach einem der vorhergehenden Ansprüche, **dadurch gekennzeichnet, dass** der Betätigungsabschnitt (32) in Längsrichtung (A) des Schnapperteils (20) axial verschiebbar eingerichtet ist.

11. Karabiner nach Anspruch 10, **gekennzeichnet durch** eine axiale Verschiebbarkeit des Betätigungsabschnitts (32) von einer die Verdrehung des Betätigungsabschnitts sperrenden ersten Sperrstellung (S1) in eine die Verdrehung des Betätigungsabschnitts freigebende zweite Sperrstellung (S2).

12. Karabiner nach Anspruch 11, **dadurch gekennzeichnet, dass** die Verriegelungseinrichtung (30) einen zusammen mit dem Betätigungsabschnitt (32) axial verschiebbaren Anlageabschnitt (43) aufweist, der in der ersten Sperrstellung (S1) in Umfangsrichtung an einer Kontaktfläche des Schnapperteils (20) anliegt und dadurch eine Verdrehung des Betätigungsabschnitts (32) verhindert.

13. Karabiner nach Anspruch 12, **dadurch gekennzeichnet, dass** der Anlageabschnitt (43) eine in einem Rand der Hülse gebildete Nut (44) aufweist, in die in der ersten Sperrstellung (S1) ein die Kontaktfläche aufweisender Stift (45) des Schnapperteils (20) eingreift.

14. Karabiner nach einem der Ansprüche 11 bis 13, **gekennzeichnet durch** ein den Betätigungsabschnitt (32) von der zweiten Sperrstellung (S2) in die erste Sperrstellung (S1) drängendes Vorspannteil (39), bevorzugt eine Feder, besonders bevorzugt eine Druckfeder.

## Claims

1. Carabiner (100, 200) with a main body (10) containing a gate opening, a gate part (20) which can be received in the gate opening, said gate part being connected at one end swivellingly with the main body (10), and a locking device (30) which, in a locked position (S), locks the gate part (20) together with the main body (10), thus preventing a swivelling of the gate part, wherein the locking device comprises an operating section (32) which can be rotated around the longitudinal axis (A) of the gate part (20) in order to unlock same, wherein the operating section (32) is configured, starting out from the locked position (S), to be rotatable in a clockwise direction (U) into a first rotation position (D1) and in an anticlockwise direction (U') into a second rotation position (D2), wherein a swivelling of the gate part (20) is enabled in both rotation positions, **characterised by** a first pre-loading part (36) which can be pre-loaded by rotating it in a clockwise direction and a second pre-loading part (38) which can be pre-loaded by rotating it in an anticlockwise direction.

2. Carabiner according to claim 1, **characterised in that** the locking device (30) is forced out of the first and/or the second rotation position into the locked position by the first and/or the second pre-loading part (36, 38), preferably a spring, in particular a torsion spring.

3. Carabiner according to claim 1 or 2, **characterised in that** the pre-loads of the first and second pre-loading parts (36, 38) are matched such that the locking device (30) is forced from both rotation positions into the locked position.

4. Carabiner according to one of the preceding claims, **characterised by** two torsion springs installed so as to act in opposite directions, one torsion spring being tensioned and the other relaxed on a rotation of the operating section (32).

5. Carabiner according to one of the preceding claims, **characterised in that** the locking device includes a locking section (34), rotatable together with the operating section, which in the locked position interacts with a contact surface (12) of the main body and as a result prevents a swivelling of the gate part (20) and which in both rotation positions is rotated around the contact surface (12) and as a result enables a swivelling of the gate part.

6. Carabiner according to one of the preceding claims, **characterised in that** the operating section (32) and preferably the locking section (34) are parts of a sleeve (35) surrounding the gate part.

7. Carabiner according to claim 6, **characterised in that** the locking section (34) is an edge section of the sleeve (35) projecting in the direction of the main body (10).

8. Carabiner according to claim 6 or 7, **characterised by** a first shoulder (41) of the sleeve limiting a rotation in a clockwise direction and a second shoulder (42) of the sleeve limiting (35) a rotation in the anticlockwise direction.

9. Carabiner according to one of the claims 6 to 8, **characterised in that** the torsion springs (36, 38) surround the gate part and are coupled, respectively, to the gate part (20) and to the sleeve (35).

10. Carabiner according to one of the preceding claims, **characterised in that** the operating section (32) is designed to be axially displaceable in the longitudinal direction (A) of the gate part (20).

11. Carabiner according to claim 10, **characterised by** an axial displaceability of the operating section (32) from a first locked position (S1) blocking the rotation of the operating section into a second locked position (S2) enabling the rotation of the operating section.

12. Carabiner according to claim 11, **characterised in that** the locking device (30) has a contact section (43), axially displaceable together with the operating section (32), which in the first locked position (S1) lies, in the circumferential direction, against a contact surface of the gate part (20), and as a result prevents a rotation of the operating section (32).

13. Carabiner according to claim 12, **characterised in that** the contact section (43) has a groove (44) formed in an edge of the sleeve into which a pin (45) of the gate part (20), carrying the contact surface, engages in the first locked position (S1).

14. Carabiner according to one of the claims 11 to 13, **characterised by** a pre-loading part (39), preferably a spring, particularly preferably a compression spring, which forces the operating section (32) from the second locked position (S2) into the first locked position (S1).

## Revendications

1. Mousqueton (100, 200) comprenant un corps de base (10) comportant une ouverture d'encliquetage, une partie formant cliquet (20) capable d'être reçue dans l'ouverture d'encliquetage, ladite partie étant reliée à une extrémité en pivotement au corps de base (10) et comprenant un dispositif de verrouillage (30) qui, dans une position de verrouillage (S), verrouille la partie formant cliquet (20) avec le corps de base (10) et empêche grâce à cela un pivotement de la partie formant cliquet, dans lequel le dispositif de verrouillage inclut une portion d'actionnement (32), qui peut être tournée tout autour de l'axe longitudinal (A) de la partie formant cliquet (20) pour le déverrouillage, dans lequel la portion d'actionnement (32) est agencée de manière à pouvoir tourner en partant de la position de verrouillage (S) dans le sens des aiguilles d'une montre (U) jusque dans une première position en rotation (D1), et dans le sens inverse aux aiguilles d'une montre (U') jusque dans une seconde position en rotation (D2), et dans lequel un pivotement de la partie formant cliquet (20) est libéré dans les deux positions de rotation,
**caractérisé par** une première pièce de précontrainte (36), susceptible d'être précontrainte par rotation dans le sens des aiguilles d'une montre, et une seconde pièce de précontrainte (38), susceptible d'être précontrainte par rotation dans le sens inverse aux aiguilles d'une montre.

2. Mousqueton selon la revendication 1, **caractérisé en ce que** le dispositif de verrouillage (30) est forcé hors de la première position en rotation et/ou de la seconde position en rotation jusque dans la position de verrouillage par la première et/ou la seconde pièce de précontrainte (36, 38), de préférence un ressort et en particulier un ressort rotatif.

3. Mousqueton selon la revendication 1 ou 2, **caractérisé en ce que** les précontraintes de la première et de la seconde pièce de précontrainte (36, 38) sont ajustées de telle manière que le dispositif de verrouillage (30) est forcé depuis les deux positions en rotation jusque dans la position de verrouillage.

4. Mousqueton selon l'une des revendications précédentes, **caractérisé par** deux ressorts rotatifs montés en sens inverse, parmi lesquels l'un des ressorts rotatifs est bandé lors d'une rotation de la portion d'actionnement (32) et l'autre est détendu.

5. Mousqueton selon l'une des revendications précédentes, **caractérisé en ce que** le dispositif de verrouillage comprend une portion de verrouillage (34) capable de rotation conjointement avec la portion d'actionnement, ladite portion de verrouillage coopérant, dans la position de verrouillage, avec une surface de contact (12) du corps de base et empêchant ainsi un pivotement de la partie formant cliquet (20), et étant tournée dans les deux positions en rotation tout autour de la surface de contact (12) et libérant grâce à cela un pivotement de la partie formant cliquet.

6. Mousqueton selon l'une des revendications précédentes, **caractérisé en ce que** la portion d'actionnement (32) et de préférence la portion de verrouillage (34) font partie d'un manchon (35) qui entoure la partie formant cliquet.

7. Mousqueton selon la revendication 6, **caractérisé en ce que** la portion de verrouillage (34) est une portion de bordure du manchon (35) qui dépasse en direction du corps de base (10).

8. Mousqueton selon la revendication 6 ou 7, **caractérisé par** un premier talon (41) du manchon, qui limite une rotation dans le sens des aiguilles d'une montre, et un second talon (42) du manchon (35), qui limite une rotation dans le sens inverse aux aiguilles d'une montre.

9. Mousqueton selon l'une des revendications 6 à 8, **caractérisé en ce que** les ressorts rotatifs (36, 38) entourent la partie formant cliquet et sont couplés chacun d'une part à la partie formant cliquet (20) et d'autre part au manchon (35).

10. Mousqueton selon l'une des revendications précédentes, **caractérisé en ce que** la portion d'actionnement (32) est agencée de manière axialement déplaçable en direction longitudinale (A) de la partie formant cliquet (20).

11. Mousqueton selon la revendication 10, **caractérisé par** une faculté de déplacement axial de la portion d'actionnement (32) depuis une première position de verrouillage (S1) qui verrouille la rotation de la portion d'actionnement jusque dans une seconde position de verrouillage (S2) qui libère la rotation de la portion d'actionnement.

12. Mousqueton selon la revendication 11, **caractérisé en ce que** le dispositif de verrouillage (30) comprend une portion d'appui (43), axialement déplaçable conjointement avec la portion d'actionnement (32), qui s'applique, dans la première position de verrouillage (S1), en direction périphérique sur une surface de contact de la partie formant cliquet (20), et empêche grâce à cela une rotation de la portion d'actionnement (32).

13. Mousqueton selon la revendication 12, **caractérisé en ce que** la portion d'appui (43) comporte une gorge (44) ménagée dans une bordure du manchon et dans laquelle s'engage, dans la première position de verrouillage (S1), une tige (45) de la partie formant cliquet (20) qui comporte la surface de contact.

14. Mousqueton selon l'une des revendications 11 à 13, **caractérisé par** une pièce de précontrainte (39), de préférence un ressort, et de façon particulièrement préférée un ressort de compression, qui force la portion d'actionnement (32) depuis la seconde position de verrouillage (S2) jusque dans la première position de verrouillage (S1).
